Europäisches Patentamt

European Patent Office

Office européen des brevets

(19)

(11) Veröffentlichungsnummer: **0 470 411 A2**

# (12) EUROPÄISCHE PATENTANMELDUNG

(21) Anmeldenummer: **91112008.7**

(22) Anmeldetag: **18.07.91**

(51) Int. Cl.5: **G10L 3/00**

(30) Priorität: **06.08.90 DE 4024890**

(43) Veröffentlichungstag der Anmeldung:
**12.02.92 Patentblatt 92/07**

(84) Benannte Vertragsstaaten:
**AT BE CH DE ES FR GB IT LI NL SE**

(71) Anmelder: **Standard Elektrik Lorenz Aktiengesellschaft**
**Lorenzstrasse 10**
**W-7000 Stuttgart 40(DE)**

(84) **BE CH DE ES FR IT LI NL AT**

Anmelder: **ALCATEL N.V.**
**Strawinskylaan 341 (World Trade Center)**
**NL-1077 XX Amsterdam(NL)**

(84) **GB SE**

(72) Erfinder: **Kopp, Dieter**
**Hirschstrasse 34**
**W-7254 Hemmingen(DE)**
Erfinder: **Dvorak, Susanne**
**Filsstrasse 11**
**W-7144 Asperg(DE)**
Erfinder: **Hörmann, Thomas**
**Wannenstrasse 1**
**W-7141 Grossbottwar-Wzh.(DE)**
Erfinder: **Ackermann, Uwe**
**Talstrasse 1**
**W-7149 Freiberg a.N.(DE)**

(74) Vertreter: **Pohl, Herbert, Dipl.-Ing et al**
**Standard Elektrik Lorenz AG Patent- und**
**Lizenzwesen Postfach 30 09 29**
**W-7000 Stuttgart 30(DE)**

(54) **Anpassung von Referenzsprachmustern an umgebungsbedingte Aussprachevarianten.**

(57) In Untersuchungen hat sich herausgestellt, daß die Ergebnisse von Spracherkennern nicht nur von der akustischen Umgebung (Hintergrundgeräusche) sondern auch von der psychischen Verfassung des Sprechers (Stress) abhängen.

Erfindungsgemäß erfolgt eine kontinuierliche Anpassung von abgespeicherten Referenzsprachmustern an Aussprachevarianten, indem bei jedem richtig erkannten Wort aus dem abgespeicherten und dem neu erkannten Muster mittels einer gewichteten Mittelwertbildung ein neues Referenzsprachmuster berechnet und anstelle des bisherigen Musters abgespeichert wird.

In bekannten Verfahren zur automatischen Anpassung wird eine mit Hilfe einer Filterbankanalyse arbeitende Spracherkennungsschaltung verwendet, die eine Anpassung an eine während der Worteingabe konstante Störumgebung in der Art realisiert, daß ein aus einem Nutzsignal- und einem Störsignalanteil bestehendes Filterbankausgangssignal durch Differenzieren und anschließendes Integrieren ein durch die Störumgebung auftretender pegelmäßig konstanter Störanteil unterdrückt wird (DE 38 08 038 C2).

Weiterhin ist es bekannt, eine Adaption der Sprachmuster zum Erzielen von sprecherunabhängigen Eigenschaften durchzuführen. Dabei werden die ursprünglichen Referenzsprachmuster durch Clustering mehrerer Sprecher gewonnen, wobei eine Adaption nur bei einem nicht richtig erkannten Sprachmuster erfolgt ("Template Adaptation In A Hypersphere Word Classifier", L.A. Smith et al, IEEE, ICASSP, 1990, VOL.1, S. 565-568).

In Untersuchungen hat sich jedoch herausgestellt, daß die Ergebnisse von Spracherkennern nicht nur von der akustischen Umgebung (Hintergrundgeräusche), sondern auch stark von der psychischen Verfassung des Sprechers (Stressfaktor) abhängen ("Acoustic and perceptual studies of Lombard speech: application to isolated-words automatic speech recognition", by J.C. Junqua, Y. Anglade, IEEE, ICASSP, 1990, VOL.2, S. 841-844).

Insbesondere bei dem Einsatz von Spracherkennern in Kraftfahrzeugen (z.B. Autotelefon) ist bei höheren Geschwindigkeiten die Stressituation für den Fahrer/Sprecher sehr hoch, so daß seine Aussprache stark von der normalen Sprechweise, für die die Referenzsprachmuster trainiert sind, abweicht.

Es stellt sich daher die Aufgabe, ein Verfahren anzugeben, das eine Anpassung an die umgebungsbedingten Aussprachevarianten ermöglicht.

Erfindungsgemäß wird diese Aufgabe durch die technische Lehre des Patentanspruchs 1 gelöst.

Insbesondere ermöglicht das erfindungsgemäße Verfahren eine kontinuierliche Anpassung an eine durch die Umgebungseinflüsse bedingte veränderte Sprechweise. Außer der veränderten Sprechweise werden bei dem erfindungsgemäßen Verfahren auch implizit Hintergrund-/Störgeräusche berücksichtigt, da diese Geräusche in dem neuen Referenzsprachmuster bereits enthalten sind, so daß die bisherigen sehr aufwendigen, mit Filterbänken arbeitenden Verfahren nicht mehr notwendig sind.

Weitere vorteilhafte Ausgestaltungen der Erfindung sind den Unteransprüchen zu entnehmen.

Im folgenden wird das erfindungsgemäße Verfahren anhand eines Ausführungsbeispiels näher erläutert.

Es wird von in einer Trainingsphase ermittelten, in einem Spracherkenner abgespeicherten Referenzsprachmustern ausgegangen.

Für jedes Referenzsprachmuster sind eine Anzahl von Merkmalsvektoren darstellende Koeffizienten $r(i)$ rahmenweise abgelegt, wobei $i$ von 0 bis zur Anzahl von Koeffizienten - 1 je Rahmen läuft (z.B. $i = 0 \ldots 9$).

Ein in der Trainingsphase berechneter $i$-ter Koeffizient des Referenzsprachmusters wird im folgenden mit $r_r(i)$ bezeichnet. Erfindungsgemäß wird zur kontinuierlichen Anpassung eines solchen abgespeicherten (ursprünglichen) Referenzsprachmusters an umgebungsbedingte Aussprachevarianten, nach Abschluß einer Erkennungsphase aus den Koeffizienten $s(i)$ eines richtig erkannten Sprachmusters und dem abgespeicherten Koeffizienten $r_r(i)$ durch eine gewichtete Mittelwertbildung ein neues Referenzsprachmuster, d.h. neue Koeffizienten $r_n(i)$ berechnet und anstelle der bisherigen, ursprünglichen Koeffizienten abgespeichert.

Die gewichtete Mittelwertbildung erfolgt nach der folgenden Vorschrift

$$r_n(i) = (a \times r_r(i) + s(i)) / (a + 1)$$

wobei $a$ den Gewichtungsfaktor darstellt. Dabei ergibt sich für $a = 1$ die an sich bekannte Mittelwertbildung. Vorzugsweise wird ein Gewichtungsfaktor $a = 3$ gewählt, wodurch die ursprünglich errechneten Koeffizienten gegenüber den neu ermittelten Koeffizienten stärker gewichtet werden, damit eine eher kontinuierliche als augenblickweise Berichtigung der Referenzsprachmuster erfolgt.

Gemäß einer weiteren Ausgestaltung der Erfindung wird nur dann ein neues Referenzsprachmuster zur kontinuierlichen Anpassung berechnet, wenn das gerade als richtig erkannte Sprachmuster und das abgespeicherte Referenzsprachmuster genügend ähnlich sind. Dazu wird ein in der Erkennungsphase berechneter Musterabstand, d.h. der jeweilige Koeffizientenwert des richtig erkannten Sprachmusters zu dem Koeffizientenwert des abgespeicherten Referenzsprachmusters mit einem vorgegebenen Schwellenwert verglichen. Falls der Musterabstand kleiner ist als der Schwellenwert, d.h. die beiden Sprachmuster sind ähnlich genug, wird ein neues Referenzsprachmuster mit Hilfe der zuvor genannten Mittelwertbildung berechnet und abgespeichert.

Für den Fall, daß das richtig erkannte Sprachmuster im Vergleich zu dem abgespeicherten Referenzsprachmuster eine andere Länge aufweist, d.h. mehr Rahmen enthält, erfolgt eine Anpassung mittels einer sogenannten dynamischen Programmierung an die Länge des abgespeicherten Referenzsprachmusters. Eine genaue Beschreibung des Verfahrens der dynamischen Programmierung ist aus IEEE, Transactions on Acoustics, Speech and Signal Processing, Vol. ASSP-26, No. 1, Feb. 1978, "Dynamic Programming Algorithm Optimization for Spoken Word Recognition", by H. Sakoe, S. Chiba, zu entnehmen.

Das erfindungsgemäße Verfahren ermöglicht also eine Anpassung der einmal trainierten Referenzsprachmuster an wechselnde Umgebungssituationen, indem jeweils dann, wenn ein Sprachmuster richtig erkannt wird, automatisch eine Anpassung durch gewichtete Mittelwertbildung erfolgt.

Sollte ferner aufgrund eines hohen Störgeräuschanteils im Sprachsignal eine zusätzliche Geräuschreduktion mittels bekannter Filterbankanalysen notwendig sein, so werden die daraus resultierenden negativen Auswirkungen der spektralen Verfärbungen ebenfalls durch die kontinuierliche Anpassung der Referenzsprachmuster gemäß der Erfindung kompensiert.

**Patentansprüche**

1. Verfahren zur kontinuierlichen Anpassung von abgespeicherten Referenzsprachmustern zur Spracherkennung an umgebungsbedingte Aussprachevarianten, bei dem jeweils nach Abschluß einer Erkennungsphase aus einem richtig erkannten Sprachmuster und dem zugehörigen abgespeicherten Referenzsprachmuster durch eine gewichtete Mittelwertbildung ein neues Referenzsprachmuster berechnet und anstelle des bisherigen Referenzsprachmusters abgespeichert wird.

2. Verfahren nach Anspruch 1, bei dem die gewichtete Mittelwertbildung nach der folgenden Vorschrift erfolgt:

$$r_n(i) = (a \times r_r(i) + s(i)) / (a + 1)$$

mit $i =$
0 bis (Anzahl von Koeffizienten - 1) eines Rahmens,
mit $r_n(i) =$
i-ter Koeffizient des neuen Referenzsprachmusters eines Rahmens,
mit $r_r(i) =$
i-ter Koeffizient des ursprünglich abgespeicherten Referenzmusters eines Rahmens,
mit $s(i) =$
i-ter Koeffizient des als richtig erkannten Sprachmusters eines Rahmens und
mit $a =$
Gewichtungsfaktor $\geq 1$, vorzugsweise 3.

3. Verfahren nach Anspruch 1 oder 2, bei dem ein in der Erkennungsphase berechneter Musterabstand (Koeffizientenwerte des richtig erkannten Sprachmusters zu Koeffizientenwerte des abgespeicherten Referenzsprachmusters) mit einem vorgegebenen Schwellenwert verglichen wird und bei dem nur im Falle einer Unterschreitung des Schwellenwertes ein neues Referenzsprachmuster gebildet wird.

4. Verfahren nach einem der vorhergehenden Ansprüche, bei dem im Falle unterschiedlicher Länge des richtig erkannten Sprachmusters im Vergleich zu dem abgespeicherten Referenzsprachmuster eine Anpassung an die Länge des abgespeicherten Referenzsprachmusters mittels einer zeitdynamischen Programmierung erfolgt.